# EUROPEAN PATENT SPECIFICATION

(11) **EP 1 552 285 B1**
(45) Date of publication and mention of the grant of the patent: **14.04.2010**
(21) Application number: 03756453.1
(22) Date of filing: 13.10.2003
(51) Int. Cl.: G01N 27/447

(54) **A TWO-DIMENSIONAL MICROFLUID BIOMOLECULE SEPARATION SYSTEM**
ZWEIDIMENSIONALES MIKROFLUIDISCHES SYSTEM ZUR TRENNUNG VON BIOMOLEKÜLEN
SYSTEME MICROFLUIDIQUE DE SEPARATION DE BIOMOLECULES

(30) Priority: 13.10.2002 DK 200201565
(43) Date of publication of application: 13.07.2005
(73) Proprietor: Picosep A/S, 5230 Odense M (DK)
(72) Inventor: RUBIN, Adam, DK-2765 Smorum (DK); FALTUM, Carsten, DK-3480 Fredensborg (DK)
(74) Representative: Orsnes, Henrik Egede
(86) International application number: PCT/DK2003/000690
(87) International publication number: WO 2004/036204

(56) References cited:
- EP-A- 1 044 716
- EP-A- 1 162 454
- US-A- 6 030 581
- US-A1- 2001 055 812

## Description

### Field of the invention

The present invention relates to a microfluid biomolecule separation system useful for separating and optionally further analysing of biomolecules such as proteins and nucleic acids.

Separation of biomolecules from a complex mixture has traditionally been performed by utilising chromatographic techniques or gel electrophoresis techniques. Traditional gel electrophoresis techniques are however time and labour consuming and may involve limitations with respect to resolution.

pH gradients in gels have e.g. been provided for polyacrylamide matrices as described in WO 93/11174 and WO 97/16462.

Since 1975, complex mixtures of proteins have generally been separated by means of two dimensional gel electrophoresis in which the physical separation of the proteins in the first dimension gel is based upon a separation according to the isoelectric point of each of the proteins to be analysed. This is referred to as isoelectric focussing (IEF) of the proteins. (See e.g. O'Farrell PH. High resolution two-dimensional electrophoresis of proteins. JBiol Chem. 1975 May 25;250(10):4007-21).

Further documents disclosing the state of the art are EP-1162454 and US-6030581.

However, a single IEF gel cannot resolve all of the proteins present in a single cell type since there are typically more than 20,000 different proteins in a cell.
Therefore.many investigators who want to study and identify some or all of the proteins expressed in a cell (proteomics) have used a second 'dimension' - a second gel wherein the proteins are separated at right angles to the first IEF gel, where the proteins are separated based on differences of their respective molecular weight. This is called two-dimensional gel electrophoresis (2DGE).

The objective of the invention is to provide an alternative system for separating biomolecules such as, by use of which a high resolution can be obtained.

Another objective is to provide a system for separating biomolecules from compositions comprising a large amount of different biomolecules e.g. above 5,000, or above 10,000 or even above 15,000 different biomolecules.

Yet another objective is to provide a system for separating and optionally identifying biomolecules which is relatively fast, simple and easy to use, and which is preferably highly reproducible.

A further objective of the invention is to provide a system for separating biomolecules by use of which a desired resolution can be obtained, and which system is labour-saving to use compared to known processes.

These and other objectives have been achieved by the invention as defined in the claims.

### Disclosure of the invention

A system for separating the biomolecules into two or more fractions is provided,
where the fractions are further processed e.g. further separated and/or identified.

It should be understood that the biomolecules to be separated and processed using the microfluid biomolecule separation system according to the invention should be contained in a liquid, such as an aqueous liquid e.g. as described in DK PA 200200875.

In the following the term 'biomolecules' is intended to include components of biological origin, such as human origin or synthetic components resembling these. The biocomponent may e.g. include biomolecules, tissues, cells, body fluids, blood components, microorganism, and derivatives thereof, or parts thereof as well as any other biocomponent.

The biocomponent may include one or more biomolecules of microbial, plant, animal or human origin or synthetic molecules resembling them. The biocomponent or components may preferably be of human origin or synthetic molecules resembling them.

Basically the method is particularly useful for the separation of biomolecules such as proteins, glyco proteins, nucleic acids, such as RNA, DNA, cDNA, LNA, PNA, oligonucleotides, peptides, hormones, antigen, antibodies, lipids and complexes including one or more of these molecules, said biomolecule preferably being selected from the group consisting of proteins and protein complexes.

Particularly relevant examples of biomolecules are proteins, peptides and protein complexes. Protein complexes include any chemical substances wherein at least one protein is linked, e.g. linked by ionic links or Van der Waals forces. The protein complexes may e.g. include at least 10 % by weight of the protein.

The proteins include denatured, partly denatured and non-denatured proteins. The denaturation degree depends on the substrate, the composition forming the separating coating, the structure of the separating coating, and the composition and or structure gradient of the separation coating if this coating comprises such gradient or gradients on the substrate. The denaturation degree also depends on the liquid comprising the proteins.

Thus in some of the embodiments, non-denatured proteins can be separated, because the biomolecules are adsorbed to (and are mobile on) the separation layer. This provides the further advantage that separated proteins or other biocomponents can be tested directly for biological activity without the need for an isolation and optional re-folding step.

The method is particularly useful for the separation of nucleic acids, proteins and parts thereof (mono-, di- and polypeptides and mono-, di- and polynucleotides), and complexes including nucleic acids and proteins.

The biocomponents to be separated may include a mixture of different types of biocomponents e.g. a mixture of proteins and nucleic acids.

The microfluid biomolecule separation system according to the invention comprises a primary separating path and one or more secondary process paths.

In one embodiment the microfluid biomolecule separation system comprises 2 or more primary separation path. These paths may be independent parts of the system or one path may provide a preliminary separation for another or other paths.

The primary separating path is in the form of a separating coating carried on a substrate, wherein said separating coating comprise one or more separating layers, wherein at least one separating layer consist of or comprises one or more pH active components comprising pH active groups defined as chemical groups that are capable of being protonated or deprotonated in aqueous environments. Such path is disclosed in DK PA2002 00875. The primary separating path may in principle have any shape and structure as disclosed in DK PA2002 00875, and it may e.g. be produced as described in DK PA2002 00875.In one embodiment the applied capture coating with the pH active groups is further equilibrated using a pH buffer e.g. an acetic acid buffer, or a phosphate buffer. The substrate may in principle of any type preferably as disclosed in DK PA2002 00875.

The pH active components are chemically linked to the substrate optionally via one or more linker molecules and/or one or more layers of the separating coating. The chemically linking is provided via a photochemically reactive group, such as a quinone e.g. as described in DK PA2002 00875.

The separating coating has a thickness of between 0.01 and 15 µm, such as between 0.5 and 10 µm.

In one embodiment of the invention, the separating substrate with the separating coating of the primary separating path is of a self supporting nature, which means that the structure does not collapse when it is dried. In this embodiment it is preferred that the thickness of the substrate with the separating coating varies less than 20 %, such as less than 10 %, such as less than 5 % from its moistured to its dry state. Also it is desired that the thickness of the separating coating varies less than 20 %, such as less than 10 %, such as less than 5 % from its moistured to its dry state.

In one embodiment the separating coating of the primary separating path has a pH value which varies less than 1 pH unit, such as less than 0.5 pH units or even less than 0.1 units along the primary separating path. The separating coating may e.g. have a pH value which is essentially equal along the primary separating path.

In this embodiment the biomolecules are separated in two fractions along the primary path when a voltage is applied over the path. If the primary separating path e.g. has a pH value of 5, the biomolecules will be separated into one fraction with isoelectric points (pI values) above 5 and one fraction with pI value below 5.
Further information about this separating process can be found in DK PA2002 00875.

Please observe that the pH value of the separating coating refers to the pH value when the separating coating is moistured with water.

In one embodiment of the micro fluid biomolecule separation system according to the invention the separating coating of the primary separating paths has a pH value which comprises a pH gradient along the primary separating path. Methods of producing such separating path with graduating pH value are disclosed in PA 2002 00593.

In one embodiment where the separating coating of the separation path have a pH gradient, and the pH gradient is provided in the form of a pH active component linked to the substrate, the gradient is constituted by a change of the number of pH active components, e.g. as described in DK PA 2002 00875.

The pH gradient may in one embodiment be a continuously gradient along the primary separating path, e.g. varying up to about 8 pH values, such as between 0.1 and 5 pH units or such as between 0.5 and 3 units along the primary separating path. The continuously gradient could e.g. be from pH 3 to 7.

The pH gradient may in one embodiment be a stepwise gradient along the primary separating path, e.g. varying up to about 8 pH values, such as between 0.1 and 5 pH units or such as between 0.5 and 3 units along the primary separating path. The steps of the gradient may be equal or different from each other both with respect to the length of the steps measured along the length of the primary separating path and the jump in pH value.

The steps of a stepwise pH value graduating separating pat is also referred to as a separating path section. Thus in one embodiment, the micro fluid biomolecule separation system according to the invention comprise 2 or more, such as 5, such as 10, such as 20, such as 50, such as 100 separating path sections along the separating path. The separating path sections differing from each other with respect to pH value, the difference in pH value of the separating coatings between two adjacent separating path sections may e.g. be in the interval between 0.05 and 4 pH unit, such as between 0.1 and 2 pH values, such as between 0.2 and 1 pH value. In one embodiment the primary separating path comprises 5 to 10 consecutive path sections with pH steps of between 0.1 and 0.5. In this embodiment the primary separating path may e.g. comprise 8 consecutive path sections e.g. with the respective pH values 4.8, 5.0, 5.2, 5.4, 5.6, 5.8, 6.0 and 6.2.

In one embodiment the path sections have the same length.

In another embodiment two or more of the path sections have different lengths. In one example the path sections has different length so that one or more path sections closer to the electrodes when a voltage over the primary separation path is applied, is shorter than the path sections farther away from the electrodes. In an example of this embodiment the primary separating path may e.g. comprise 8 consecutive path sections e.g. with the respective length along the path 2x, 1.6x, 1.2x, 1x, 1x, 1.2x, 1.6x and 2x, wherein x is e.g. between 1 and 100 mm, such as between 2 and 10 mm, such as around 5 mm.

The primary separating path may in principle have any desired length. In one embodiment the primary separating path has a length of between 1 mm and 10 cm, such as between 5 and 50 mm.

The microfluid biomolecule separation system of the invention further comprises means for applying a voltage over the primary separating path. Such means for applying a voltage is generally known in the art, and may preferably include a pair of electrodes which may be mounted to the primary separating path or be adapted to be mounted thereto, so that the electrodes thereby preferably come into contact with the separating coating at a distance from each other along the primary separating path.

In one embodiment the microfluid biomolecule separation system comprise one or a pair of electrode barrier, placed between the respective electrode and the separating coating so as to prevent the biomolecules to come into direct contact with the electrodes, because such contact could denaturate, or other how change the biomolecules. The anode electrode barrier could e.g. be in the form of an electrical conductive moistured substance e.g. a gel with a pH value lower than the pH value of the adjacent separating coating and the cathode electrode barrier could e.g. be in the form of an electrical conductive moistured substance e.g. a gel with a pH value lower than the pH value of the adjacent separating coating.

The microfluid biomolecule separation system comprises one or more secondary process paths, e.g. in the form of separating path(s) and/or identification path(s). By the term identification path means a path that leads to the identification of one or more parameter of the biomolecules e.g. the mass, the size, or a specific activity e.g. to react with an antigen or similar.

The or each secondary process path(s) comprises one or more inlets in liquid communication with the primary separating path. The one or more inlets for the secondary process path(s) are placed along or extend along the primary separating path. Thereby biomolecules separated along the primary path can e.g. after the separation along the primary separating path, be introduced into the secondary process path(s) for being processed further e.g. further separated and/or identified with respect to one or more parameter, such as size, mass or reactivity towards a reagent, such as an antigen.

In one embodiment of the microfluid biomolecule separation system according to the invention the primary separating path and the secondary process path(s) are placed in relation to each other so that the biomolecules after being separated on the primary separating path will pass from the primary separating path via the inlet to the secondary process path(s) when a driving force is applied acting in the direction of one or more of the secondary process path(s). This driving force may e.g. be a centripetal force or an electrophoresis force.

In one embodiment of the micro fluid biomolecule separation system according to the invention, the primary separating path comprises one, or more collection stations, such as at least 3 collection stations, such as at least 4 collection stations, such as at least 5 collection stations, such as at least 7 collection stations, such as at least 10 collection stations. The collection stations may e.g. be as described in DK PA2002 00875.

In one embodiment the one or more collection stations is in the form of a collecting unit comprising a collecting space e.g. in the form of a porous material, a collecting chamber or collecting cavity.

The collection stations is preferably in liquid communication with the one or more inlets for the secondary process path(s), so that the collected biomolecules in the collection station will flow into the secondary process path(s) when a driving force over the secondary process path(s) is applied, e.g. a centripetal force or an electrophoresis force.

In one embodiment the one or more collection stations is in the form of one or more openings in or overflow edges of the primary separating path. The one or more openings in or overflow edges of the primary separating path may e.g. provide the one or more inlets for the secondary process path(s), so that the collected biomolecules in the collection station will flow into the secondary process path(s) when a driving force over the secondary process path(s) is applied, e.g. a centripetal force or an electrophoresis force.

In one embodiment of the microfluid biomolecule separation system according to the invention where the separation system according to claim 8 comprise two or more separating path sections, the major part and preferably all of these two or more separating path sections comprise a section collection station.

In one embodiment of the micro fluid biomolecule separation system according to the invention the one or more secondary path(s) is in the form of or comprises a gel, such as a gel selected from the group consisting of polyamide gels, such as a cross-linked polyacrylamide gel containing sodium dodecylsulfate (SDS), an ampholyte-containing cross-linked gel (IEF), agarose gel, cellulose gel and silica gel. In this embodiment it is desired that the microfluid biomolecule separation system comprise only one or a few secondary path.

In one embodiment comprising one secondary path in the form of a gel the primary path and the secondary path is essentially perpendicular to each other. The secondary path preferably has a length between a top edge and a bottom edge and a width, and the primary separating path preferably extends along the with of the secondary path, and being in contact with the secondary path e.g. with or near (1-100mm) the bottom edge of the secondary to allow space for applying an electrode, whereby said primary path and said secondary path being in liquid communication with each other. In an example of this embodiment the primary separating path is applied onto a sheet formed gel with inlet opening or openings into the sheet formed gel.

In this embodiment where the secondary process path is in the form of a gel it is desired that the system further comprises means for applying a voltage over the secondary process path. In a preferred use the voltage is first applied over the primary separating path, and after separation the voltage is applied over the secondary gel process path.

In one embodiment of the micro fluid biomolecule separation system according to the invention the primary separating path is in the form of or contained in channels in a substrate. In this embodiment the substrate of the primary separating path may be constituted by the channel wall or the substrate containing the separating coating may be placed in the channel.

In one embodiment of the micro fluid biomolecule separation system according to the invention the secondary process path or paths is/are in the form of or contained in channels in a substrate.

In one embodiment of the microfluid biomolecule separation system according to the invention the system is in the form of a disc shaped device, comprising a microchannel structure. The microchannel structure preferably includes the secondary process paths. In one embodiment the microchannel structure includes both the primary separating path and the secondary process paths.

The disc shaped device may e.g. be as described in any one of WO 0147637, WO 97/21090, WO 02075775, WO 02075776, and WO 9958245, with the further proviso that the disc further comprise a primary separating path as described above in liquid communication with secondary process path(s), wherein the secondary process path(s) is constituted by the microchannel structure disclosed in respectively WO 0147637, WO 97/21090, WO 02075775, WO 02075776, WO 0146465 and WO 9958245.

In one embodiment the microfluid biomolecule separation system of the invention is therefore in the form of a disc shaped device comprising a MS-port as described in WO 02075776.

In one embodiment the microfluid biomolecule separation system of the invention is in the form of a disc shaped device comprising secondary process path(s) in the form of microchannel structures with a coat exposing a nonionic hydrophilic polymer as disclosed in WO 0147637.

In one embodiment the microfluid biomolecule separation system of the invention is in the form of a disc shaped device comprising secondary process path(s) including a-U-shaped volume-defining structure as defined in WO 0146465.

In one embodiment the microfluid biomolecule separation system of the invention is in the form of a disc shaped device comprising secondary process path(s) which device is adapted such that the flow within the secondary process path(s) is controlled by different surfaces of the device having different surface characteristics as further described in WO 9958245.

In one embodiment the microfluid biomolecule separation system of the invention is in the form of a disc shaped device comprising a planar surface encoded with an electromagnetically-readable instruction set for controlling rotational speed duration or direction a further described in WO 9721090.

In one embodiment the microchannels has a cross sectional area of less than 10 mm², preferably less than 5 mm², even more preferably less than 0.1 mm². The microchannel structure may also includes reaction chamber(s), reservoirs and similar with a larger cross sectional dimension that the microchannels e.g. up to 2 times, up to 3 times, up to 5 times or even up to 10 times larger than the microchannels.

In one embodiment the disc shape device is essentially circular and comprises a centre. The centre may e.g. be in the form of an aperture, such as an aperture with a diameter of 1-100 mm, such as 5-50 mm. The microchannel structure comprising the primary separating path and the secondary process path(s) may be arranged around the centre, preferably with the primary separating path arranged a an partly or totally annular ring around the centre, and the secondary process path(s) arranged closer to the periphery than the primary separating path.

In one embodiment the secondary process paths comprise one or more chambers e.g. in the form of chambers with a filter device and/ in the form of reaction chambers, such as reaction chambers with capture molecules for capturing biomolecules capable of reacting with the capture molecules.

In one embodiment the secondary process paths comprise microchannels with walls having varying surface characteristics.

In one embodiment the secondary process paths comprise microchannels comprising a separating medium such as a gel e.g. selected from the group of gels mentioned above.

In one embodiment the primary separating path is provided by a primary microchannel with a separating coating. The primary microchannel may e.g. be essential circular and extending around the centre of the disc shaped device. In this embodiment the secondary process paths preferably extend from the primary path and towards the periphery of the disc shaped device. Furthermore, the channel providing the primary separating path may comprise 2 or more collection stations in the form of openings in the primary microchannel, which openings constitutes inlets to the secondary paths.

In operation of the microfluid biomolecule separation system in the form of a disc formed device as described above, the biomolecule to be treated is applied to the primary separating path e.g. on the middle of the path or at one or both of its end. Voltage is applied over the primary separating path to thereby separate the biomolecules into pH fractions, thereafter the separated biomolecules are forced into the secondary process path(s) using centripetal force. The centripetal force is applied by rotating the disc e.g. as described in any one of WO 0147637, WO 97/21090, WO 02075775, WO 02075776, WO 0146465 and WO 9958245.

In the following the invention will be described further with reference to the drawings and examples.

### Drawings

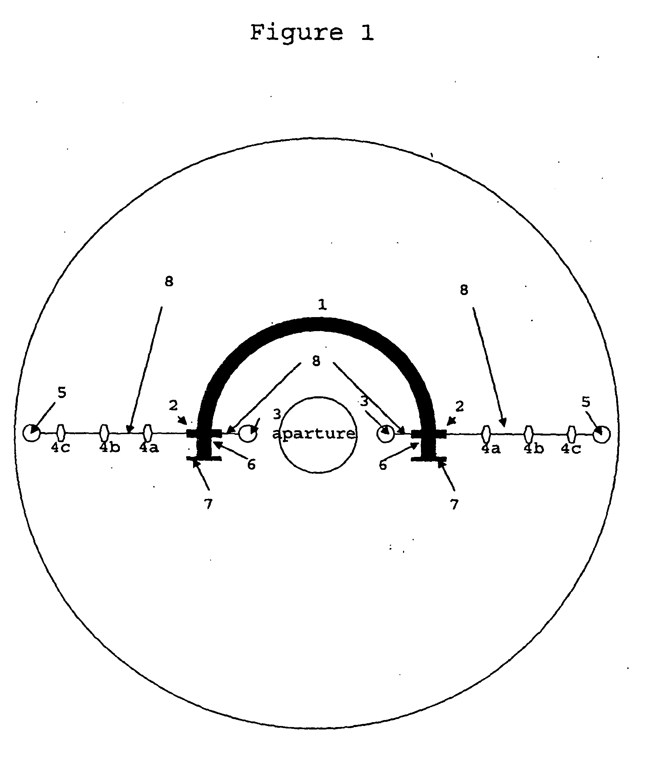

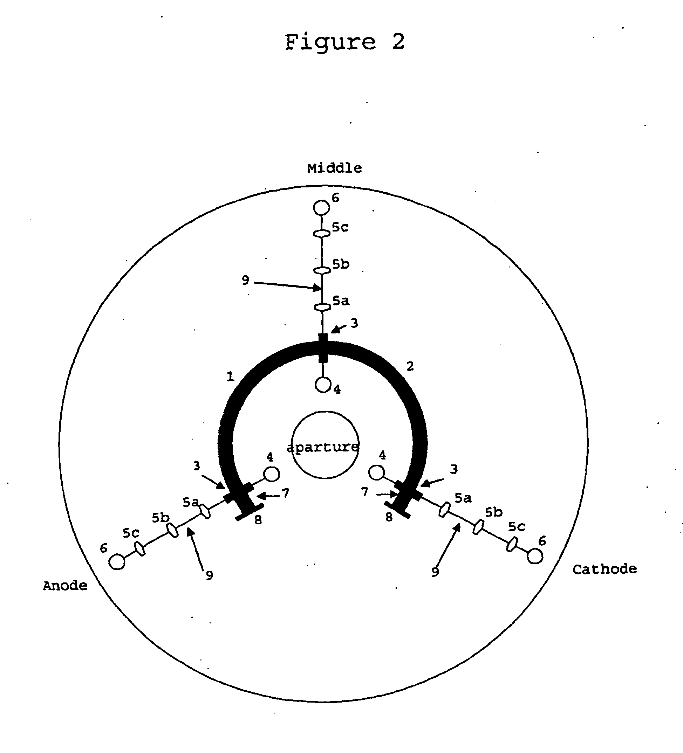

Figure 1 is a schematic illustration of the disk produced and used according to example 1.

### Examples

Example 1 Electrophoresis disc with two collection stations

### Materials used:

- Custom made polyester disk.
- Non woven polyester material from Freudenberg (H1010, 53 g/m²)
- N-[4-(3-Aminopropyl)morpholyl]-9.10-antraquinone-2-carboxamide. (AQ-03)
- 10 × 5 mm IEF Sample Application Pieces (80-1129-46) from Amersham Pharmacia Biotech AB
- 10 × 2.5 mm IEF Electrode Strip (18-1004-40) from Amersham Pharmacia Biotech AB
- Sample application strips (18-1002-76) from Amersham Pharmacia Biotech AB
- Platinum electrodes ∅ 0.5 mm
- 10 × 3 mm Polyacrylamide gel; 8%T:2.7%C; pH 3.5
- 10 × 3 mm Polyacrylamide gel; 8%T:2.7%C; pH 10.5
- Minitan Filtration Plate - PBGC 0MP 04 - 10 kDa) from Millipore
- Minitan Filtration Plate - PBTK 0MP 04 - 30 (kDa) from Millipore
- Minitan Filtration Plate - PBQK 0MP 04 - 50 (kDa) from Millipore
- 0.1 M Na Phosphate buffer - pH 6.5
- 7M Urea; 2M Thiourea
- Lysis buffer (7M Urea; 2M Thiourea; 2% CHAPS; 5mM TRIS)
- 90 µg HeLa extract in 20 µl Lysis buffer
- Compressed nitrogen - N48
- Programmable Power Supply (EPS 3501 XL) from Amersham Pharmacia Biotech AB
- Custom made disk spinner

### Functionalisation of Non woven polyester:

1 m of the polyester material H1010 with a width of 55 mm was placed on a mechanical device which feeds the strip in a continues loop. The strip is fed with a 100 µM aqueous solution of AQ-03, exposed to UV radiation and then dried with hot air, before it returns to the AQ-03 solution. In this way the anthraquinone is covalent bound to the polymer material. A total of 100 µmoles AQ-03 is bound. The material is equilibrated in the phosphate buffer, washed two times in distilled water and dried.

### Preparation of experimental setup:

The custom made polyester disk has a diameter of 120 mm, a thickness of 2 mm and a 15 mm centre hole. A circular primary separating path in the form of a separating grove 1 is machined with a diameter of 45 mm, a width of 3 mm, and a depth of 1 mm. The separating grove covers 180° of the circumference of the disk. At both ends of the circular separating grove 1 a rectangular collection station grove 2 is placed perpendicular on the ends with a width of 10 mm, a thickness of 5 mm and a depth of 1 mm. At the radian through each rectangular collection station groves 2 is placed a reservoir 3 between the centre and each collection station groove 2. The reservoir 3 is connected to the collection station grove by a flow channel 8. The flow channel 8 continues radially outward on the other side of the collection station grove 2, and is intersected by three filter holders 4a, 4b, 4c at 60, 75 and 90 mm from the centre of the disc, and a reservoir 5 at 105 mm from the centre of the disc. Perpendicular to each rectangular collection station grove 2 is machined another rectangular gel grove 6 with a length of 10 mm, a width of 3 mm and a depth of 1 mm. Finally rectangular electrode groves 7 are machined ad the end of the gel grooves 6 with a length of 10 mm, a width of 2.5 mm and a depth of 1 mm.

The functionalised material H1010 is cut to fit the circular separating grove 1, and placed in the separating grove 1. One sample application piece is placed in each of the rectangular collection station grooves 2 with good contact to the H1010 material. In the left rectangular gel groove 6 the gel with pH 3.5 is placed as a barrier against the anode, and in the right rectangular gel groove 6 the gel with pH 10.5 is placed as a barrier against the cathode. Both gels are placed in good contact with the sample application pieces. In each of the electrode grooves 7 an IEF electrode strip is placed in good contact with the respective gel material. Electrodes are placed on top of each IEF electrode strip, such that the left one is anode and the right one is cathode.

### Electrophoresis:

The two IEF electrode strips are moistured with a 7M urea; 2M thiourea solution. The gels are rehydrated with Lysis buffer. The H1010 is saturated in Lysis buffer. The biomolecule sample is applied at the middle of the primary separating path of functionalized H1010 by use of a sample application strip.

The setup is placed in a nitrogen atmosphere and voltage is applied to the system in a linear ramp step from 0 to 2500 V in 4 hours. Then the voltage is held constant at 2500 V for additionally 11 hours before the electrophoresis is terminated. During the electrophoresis the current in the system is monitored in order to continuously follow the process.

### Fil tration:

The minitan filters are cut to fit the filter holders 4a, 4b, 4c and placed such that the 50 kDa filters are placed in the innermost filter holders 4a, the 30 kDa filters are placed in the middle filter holders 4b, and the 10 kDa filters are placed in the outermost filter holders 4c. 220 µl Lysis 0 buffer is placed in each reservoir 3 and the disk is rotated at 100 RPM for 60 seconds (reextraction of sample from collection station grooves 2) and then at 1500 RPM for 10 minutes in order to filtrate.

### Results:

The separated material is collected from the filters (4a, 4b, 4c) and from the reservoirs 5 in the following fractions:
Left:
   (4a): pI < 6.5; mass >50 kDa
   (4b) pI < 6.5; 50 kDa > mass > 30 kDa
   (4c) pI < 6.5; 30 kDa > mass > 10 kDa
   (5) pI < 6.5; mass < 10 kDa
Right:
   (4a): pI > 6.5; mass >50 kDa
   (4b) pI > 6.5; 50 kDa > mass > 30 kDa
   (4c) pI > 6.5; 30 kDa > mass > 10 kDa
   (5) pI > 6.5; mass < 10 kDa

### Example 2 Electrophoresis disc with three collection stations

### Materials used:

- Custom made polyester disk.
- Non woven polyester material from Freudenberg (H1010, 53 g/m²)
- 4-(2-anthraquinoyl)-4-oxo-3-aza-butanoic acid (AQ-01)
- N-[4-(3-Aminopropyl)morpholyl]-9.10-antraquinone-2-carboxamide. (AQ-03)
- 10 × 5 mm IEF Sample Application Pieces (80-1129-46) from Amersham Pharmacia Biotech AB
- 10 × 2.5 mm IEF Electrode Strip (18-1004-40) from Amersham Pharmacia Biotech AB
- Sample application strips (18-1002-76) from Amersham Pharmacia Biotech AB
- Platinum electrodes ∅ 0.5 mm
- 10 × 3 mm Polyacrylamide gel; 8%T:2.7%C; pH 3.5
- 10 × 3 mm Polyacrylamide gel; 8%T:2.7%C; pH 10.5
- Minitan Filtration Plate - PBGC 0MP 04 - 10 kDa) from Millipore
- Minitan Filtration Plate - PBTK 0MP 04 - 30 (kDa) from Millipore
- Minitan Filtration Plate - PBQK 0MP 04 - 50 (kDa) from Millipore
- 0.1 M Na Phosphate buffer - pH 6.5
- 7M Urea; 2M Thiourea
- Lysis buffer (7M Urea; 2M Thiourea; 2% CHAPS; 5mM TRIS)
- 90 µg HeLa extract in 20 µl Lysis buffer
- Compressed nitrogen - N48
- Programmable Power Supply (EPS 3501 XL) from Amersham Pharmacia Biotech AB
- Custom made disk spinner

### Functionalisation of Non woven polyester:

1 m of the polyester material H1010 with a width of 55 mm was placed on a mechanical device which feeds the strip in a continues loop. The strip is feed with a 100 µM aqueous solution of AQ-01, exposed to UV radiation and then dried with hot air, before it returns to the AQ-01 solution. In this way the anthraquinone is covalent bound to the polymer material. A total of 100 µmoles AQ-01 is bound. This result in a material with pH 4.

The same coating procedure was repeted on a new piece of H1010 with a 100 µM aqueous solution of AQ-03. This AQ-03 treated material is equilibrated in the phosphate buffer and washed two times in distilled water and dried. This result in a material with pH 6.5.

### Preparation of experimental setup:

The custom made polyester disk has a diameter of 120 mm, a thickness of 2 mm and a 15 mm centre hole. A circular primary separating path in the form of a separating grove 1, 2 is machined with a diameter of 45 mm, a width of 3 mm, and a depth of 1 mm. The separating grove 1,2 covers 270° of the circumference of the disk. At both ends of the circular separating grove 1, 2 and at the middle a rectangular collection station grove 3 is placed perpendicular to the circular grove with a width of 10 mm, a thickness of 5 mm and a depth of 1 mm. At the radian through each rectangular collection station groves 3, between the centre and the respective collection station grooves 3, a reservoir 4 is placed. The reservoir 4 is connected to the collection station grove 3 by a flow channel 9. The flow channel 9 continues radially outward on the other side of the collection station grove 3, and is intersected by three filter holders 5a, 5b, 5c at 60, 75 and 90 mm from the centre of the disc, and a reservoir 6 at 105 mm from the centre of the disc. Perpendicular to the rectangular collection station grove 3 at the anode section and the cathode section is machined another rectangular gel grove 7 with a length of 10 mm, a width of 3 mm and a depth of 1 mm. Finally rectangular electrode groves 8 are machined ad the end of the gel grooves 7 with a length of 10 mm, a width of 2.5 mm and a depth of 1 mm.

The AQ-01 functionalised material H1010 is cut to fit the circular separating grove 1, and placed in the separating grove 1. The AQ-03 functionalised material H1010 is cut to fit the circular separating grove 2, and placed in the separating grove 2. One sample application piece is placed in each of the rectangular collection station grooves 3 with good contact to the H1010 material. In the anodic rectangular gel groove 7 the gel with pH 3.5 is placed, and in the cathodic rectangular gel groove 7 the gel with pH 10.5 is placed. Both gels are placed in good contact with the sample application pieces. In each of the electrode grooves 8 an IEF electrode strip is placed in good contact with the respective gel material. The anodic electrode is placed on top of the anodic IEF electrode strip 8 and the cathodic electrode is placed on top of the catodic IEF electrode strip 8.

### Electrophoresis:

The two IEF electrode strips are moistured with a 7M urea; 2M thiourea solution. The gels are rehydrated with Lysis buffer. The H1010 is saturated in Lysis buffer. The protein sample is applied at the middle of the primary separating path 2 of the AQ-03 functionalized H1010 by use of a sample application strip.

The setup is placed in a nitrogen atmosphere and voltage is applied to the system in a linear ramp step from 0 to 2500 V in 4 hours. Then the voltage is held constant at 2500 V for additionally 11 hours before the electrophoresis is terminated. During the electrophoresis the current in the system is monitored in order to continuously follow the process.

### Filtration:

The minitan filters are cut to fit the filter holders 5a, 5b, 5c and placed such that the 50 kDa filters are placed in the innermost filter holders 5a, the 30 kDa filters are placed in the middle filter holders 5b, and the 10 kDa filters are placed in the outermost filter holders 4c. 220 µl Lysis 0 buffer is placed in each reservoir 4 and the disk is rotated at 100 RPM for 60 seconds (reextraction of sample from collection station grooves 3) and then at 1500 RPM for 10 minutes in order to filtrate.

### Results:

The separated material is collected from the filters (5a, 5b, 5c) and from the reservoirs 6 in the following fractions:
Anode
   (5a): pI < 4; mass >50 kDa
   (5b) pI < 4; 50 kDa > mass > 30 kDa
   (5c) pI < 4; 30 kDa > mass > 10 kDa
   (6) pI < 4; mass < 10 kDa
Middle:
   (5a): 4 < pI < 6.5; mass >50 kDa
   (5b) 4 < pI < 6.5; 50 kDa > mass > 30 kDa
   (5c) 4 < pI < 6.5; 30 kDa > mass > 10 kDa
   (6) 4 < pI < 6.5; mass < 10 kDa
Cathode:
   (5a): pI > 6.5; mass >50 kDa
   (5b) pI > 6.5; 50 kDa > mass > 30 kDa
   (5c) pI > 6.5; 30 kDa > mass > 10 kDa
   (6) pI > 6.5; mass < 10 kDa

## Claims

1. A micro fluid biomolecule separation system being in the form of a disc shaped device comprising a microchannel structure wherein said disc shaped device being essentially circular and comprises a centre, said microchannel structure being arranged around said centre, said system comprising:
a primary separating path and one or more secondary process paths, said primary separating path being in the form of a separating coating carried on a substrate, wherein said separating coating comprising one or more separating layers, at least one separating layer consisting of or comprises one or more pH active components comprising pH active groups defined as chemical groups that are capable of being protonated or deprotonated in aqueous environments, said fluid biomolecule separation system comprises means for applying a voltage over the primary separating path, the or each secondary process path(s) comprising one or more inlets in liquid communication with the primary separating path, said one or more inlets being placed along or extends along the primary separating path, wherein the separating coating has a thickness of between 0.01 and 15 µm and that said pH active components being linked to the substrate via a photochemically reactive group.

2. A micro fluid biomolecule separation system according to claim 1, wherein the separating coating of the primary separating path has a pH value which varies less than 1 pH unit along the primary separating path, said separating coating having a pH value which is essentially equal along the primary separating path.

3. A micro fluid biomolecule separation system according to claim 1 or 2, further comprising a pair of electrodes, in the form of a positive electrode and a negative electrode in contact with or capable of being brought into contact with the separating coating at a distance from each other along the primary separating path.

4. A micro fluid biomolecule separation system according to any one of the preceding claims wherein the primary separating path comprises one or more collection stations

5. A micro fluid biomolecule separation system according to claim 4 wherein each separating path sections comprise a section collection station.

6. A micro fluid biomolecule separation system according to any one of the preceding claims wherein the primary separating path has a length of between 1 mm and 10 cm.

7. A micro fluid biomolecule separation system according to any one of the preceding claims comprising one secondary path, said secondary path preferably being in the form of a gel.

8. A micro fluid biomolecule separation system according to claim 7 wherein said primary path and said secondary path being perpendicular to each other, said secondary path having a length between an top edge and a bottom edge and a width, said primary separating path preferably extends along the width of said secondary path, and being in contact with the bottom edge of said secondary path whereby said primary path and said secondary path being in liquid communication with each other.

9. A micro fluid biomolecule separation system according to claim 8 wherein said system further comprises means for applying a voltage over the secondary process path.

10. A micro fluid biomolecule separation system according to any one of the preceding claims 1-9 wherein said secondary path(s) being in the form of or contained in channels in a substrate.

11. A micro fluid biomolecule separation system according to any one of the preceding claims, wherein said secondary process paths comprise one or more reaction chambers.

12. A micro fluid biomolecule separation system according to any one of the preceding claims, wherein said secondary process paths comprise microchannels with walls having varying surface characteristics.

13. A micro fluid biomolecule separation system according to any one of the preceding claims, wherein said secondary process paths comprise microchannels comprising a separating medium.

14. A micro fluid biomolecule separation system according to any one of the preceding claims, wherein said primary separating path being provided by a primary microchannel with a separating coating, said primary microchannel being essential circular and extending around the centre of the disc shaped device.

15. A micro fluid biomolecule separation system according to claim 14 wherein said secondary process paths being extending from the primary path and towards the periphery of the disc shaped device.

16. A micro fluid biomolecule separation system according to any one of the preceding claims, wherein said channel providing the primary separating path comprise 2 or more collection stations in the form of openings in the primary microchannel, which openings constitutes inlets to the secondary paths.

17. A micro fluid biomolecule separation system according to any one of the preceding claims wherein one or more of the secondary process paths being separating path or paths.

## Patentansprüche

1. Mikrofluides System zur Trennung von Biomolekülen, das die Gestalt einer scheibenförmigen Vorrichtung aufweist, umfassend eine Mikrokanalstruktur, wobei die scheibenförmige Vorrichtung im Wesentlichen kreisförmig ist und ein Zentrum aufweist, wobei die Mikrokanalstruktur um das Zentrum herum angeordnet ist, wobei das System folgendes umfasst:
einen primären Trennungsweg und einen oder mehrere sekundäre Prozesswege, wobei der primäre Trennungsweg von der Form einer Beschichtung zur Trennung ist, die auf einem Substrat getragen wird, wobei die Beschichtung zur Trennung eine oder mehrere Trennungsschichten umfasst, wobei wenigstens eine Trennungsschicht einen oder mehrere pH-aktive Bestandteile, umfassend als chemische Gruppen definierte pH-aktive Gruppen, die in der Lage sind, in wässrigen Umgebungen protoniert oder deprotoniert zu werden, umfasst oder daraus besteht, wobei das fluide System zur Trennung von Biomolekülen Mittel zum Anlegen einer Spannung über den primären Trennungsweg umfasst, wobei der oder jeder sekundäre Prozessweg einen oder mehrere Einlässe in Verbindung über eine Flüssigkeit mit dem primären Trennungsweg umfasst, wobei einer oder mehrere Einlässe entlang des primären Trennungswegs angebracht sind oder sich erstrecken, worin die Beschichtung zur Trennung eine Dicke zwischen 0,01 und 15 µm aufweist und die pH-aktiven Bestandteile über eine photochemisch reaktive Gruppe an das Substrat gebunden sind.

2. Mikrofluides System zur Trennung von Biomolekülen nach Anspruch 1, worin die Beschichtung des primären Trennungswegs zur Trennung einen pH-Wert aufweist, der um weniger als eine pH-Werteinheit entlang des primären Trennungswegs variiert, wobei die Beschichtung zur Trennung einen pH-Wert aufweist, der entlang des primären Trennungswegs im Wesentlichen gleich bleibt.

3. Mikrofluides System zur Trennung von Biomolekülen nach Anspruch 1 oder 2, das weiterhin ein Elektrodenpaar in Form einer positiven Elektrode und einer negativen Elektrode umfasst, die mit der Beschichtung zur Trennung in Kontakt stehen oder mit ihr in Kontakt gebracht werden können und die sich entlang des primären Trennungswegs in einem Abstand voneinander befinden.

4. Mikrofluides System zur Trennung von Biomolekülen nach einem der vorangegangenen Ansprüche, worin der primäre Trennungsweg eine oder mehrere Sammelstationen umfasst.

5. Mikrofluides System zur Trennung von Biomolekülen nach Anspruch 4, worin jeder Trennungswegabschnitt eine Sammelstation für den Abschnitt umfasst.

6. Mikrofluides System zur Trennung von Biomolekülen nach einem der vorangegangenen Ansprüche, worin der primäre Trennungsweg eine Länge zwischen 1 mm und 10 cm aufweist.

7. Mikrofluides System zur Trennung von Biomolekülen nach einem der vorangegangenen Ansprüche, das einen sekundären Weg umfasst, wobei der sekundäre Weg vorzugsweise in der Form eines Gels vorliegt.

8. Mikrofluides System zur Trennung von Biomolekülen nach Anspruch 7, worin der primäre Weg und der sekundäre Weg zueinander senkrecht sind, wobei der sekundäre Weg eine Länge zwischen einer oberen Kante und einer unteren Kante und eine Breite aufweist, wobei der primäre Trennungsweg sich vorzugsweise entlang der Breite des sekundären Wegs erstreckt, und sich in Kontakt mit der unteren Kante des sekundären Wegs befindet, wobei der primäre Weg und der sekundäre Weg über eine Flüssigkeit miteinander in Verbindung stehen.

9. Mikrofluides System zur Trennung von Biomolekülen nach Anspruch 8, worin das System weiterhin Mittel zum Anlegen einer Spannung über den sekundären Weg umfasst.

10. Mikrofluides System zur Trennung von Biomolekülen nach einem der vorangegangenen Ansprüche 1-9, worin der (die) sekundäre(n) Weg(e) die Form von Kanälen in einem Substrat aufweist oder darin enthalten ist.

11. Mikrofluides System zur Trennung von Biomolekülen nach einem der vorangegangenen Ansprüche, worin die sekundären Prozesswege eine oder mehrere Reaktionskammern umfassen.

12. Mikrofluides System zur Trennung von Biomolekülen nach einem der vorangegangenen Ansprüche, worin die sekundären Prozesswege Mikrokanäle mit Wänden umfassen, die variierende Oberflächencharakteristika aufweisen.

13. Mikrofluides System zur Trennung von Biomolekülen nach einem der vorangegangenen Ansprüche, worin die sekundären Prozesswege Mikrokanäle umfassen, die ein Trennungsmedium umfassen.

14. Mikrofluides System zur Trennung von Biomolekülen nach einem der vorangegangenen Ansprüche, worin die primären Trennungswege durch einen primären Mikrokanal mit einer Beschichtung zur Trennung bereitgestellt werden, wobei der primäre Mikrokanal im Wesentlichen kreisförmig ist und sich um das Zentrum der scheibenförmigen Vorrichtung herum erstreckt.

15. Mikrofluides System zur Trennung von Biomolekülen nach Anspruch 14, worin die sekundären Prozesswege sich ausgehend von dem primären Weg in Richtung der Peripherie der scheibenförmigen Vorrichtung erstrecken.

16. Mikrofluides System zur Trennung von Biomolekülen nach einem der vorangegangenen Ansprüche, worin der den primären Trennungsweg bereitstellende Kanal zwei oder mehrere Sammelstationen in Form von Öffnungen in dem primären Mikrokanal umfasst, wobei die Öffnungen Einlässe zu den sekundären Wegen bilden.

17. Mikrofluides System zur Trennung von Biomolekülen nach einem der vorangegangenen Ansprüche, worin einer oder mehrere der sekundären Prozesswege ein Trennungsweg oder Wege sind.

## Revendications

1. Système microfluidique de séparation de biomolécules sous la forme d'un dispositif en forme de disque qui comprend une structure à microcanaux, ledit dispositif en forme de disque étant sensiblement circulaire et comprenant un centre, ladite structure à microcanaux étant disposée autour dudit centre, ledit système comprenant :
une voie de séparation primaire et une ou plusieurs voies de traitement secondaires, ladite voie de séparation primaire se trouvant sous la forme d'un revêtement de séparation porté sur un substrat, ledit revêtement de séparation comprenant une ou plusieurs couches de séparation, au moins une couche de séparation étant constituée par ou comprenant un ou plusieurs composants à pH actif comprenant des groupes à pH actif définis comme des groupes chimiques qui peuvent être protonés ou déprotonés dans des environnements aqueux, ledit système fluidique de séparation de biomolécules comprenant des moyens destinés à appliquer une tension sur la voie de séparation primaire, la ou les voie(s) de traitement secondaires comprenant un ou plusieurs orifices d'entrée en communication liquide avec la voie de séparation primaire, ledit ou lesdits orifices d'entrée étant placés le long ou s'étendant le long de la voie de séparation primaire, le revêtement de séparation ayant une épaisseur comprise entre 0,01 et 15 µm et lesdits composants à pH actif étant liés au substrat via un groupe photochimiquement réactif.

2. Système microfluidique de séparation de biomolécules selon la revendication 1, dans lequel le revêtement de séparation de la voie de séparation primaire a une valeur de pH qui varie de moins de 1 unité de pH le long de la voie de séparation primaire, ledit revêtement de séparation ayant une valeur de pH qui est sensiblement identique le long de la voie de séparation primaire.

3. Système microfluidique de séparation de biomolécules selon la revendication 1 ou 2, comprenant en outre une paire d'électrodes, sous la forme d'une électrode positive et d'une électrode négative en contact avec ou pouvant être mises en contact avec le revêtement de séparation à une distance l'une de l'autre le long de la voie de séparation primaire.

4. Système microfluidique de séparation de biomolécules selon l'une quelconque des revendications précédentes, dans lequel la voie de séparation primaire comprend une ou plusieurs stations de collecte.

5. Système microfluidique de séparation de biomolécules selon la revendication 4, dans lequel chaque section de la voie de séparation comprend une station de collecte de section.

6. Système microfluidique de séparation de biomolécules selon l'une quelconque des revendications précédentes, dans lequel la voie de séparation primaire a une longueur comprise entre 1 mm et 10 cm.

7. Système microfluidique de séparation de biomolécules selon l'une quelconque des revendications précédentes, comprenant une voie secondaire, ladite voie secondaire étant de préférence sous la forme d'un gel.

8. Système microfluidique de séparation de biomolécules selon la revendication 7, dans lequel ladite voie primaire et ladite voie secondaire sont perpendiculaires l'une à l'autre, ladite voie secondaire ayant une longueur entre un bord supérieur et un bord inférieur et une largeur, ladite voie de séparation primaire s'étendant de préférence le long de la largeur de ladite voie secondaire, et étant en contact avec le bord inférieur de ladite voie secondaire, moyennant quoi ladite voie primaire et ladite voie secondaire sont en communication liquide l'une avec l'autre.

9. Système microfluidique de séparation de biomolécules selon la revendication 8, dans lequel ledit système comprend en outre des moyens destinés à appliquer une tension sur la voie de traitement secondaire.

10. Système microfluidique de séparation de biomolécules selon l'une quelconque des revendications 1 à 9, dans lequel ladite (lesdites) voie(s) secondaire(s) se trouvent sous la forme de ou sont contenues dans des canaux dans un substrat.

11. Système microfluidique de séparation de biomolécules selon l'une quelconque des revendications précédentes, dans lequel lesdites voies de traitement secondaires comprennent une ou plusieurs chambres de réaction.

12. Système microfluidique de séparation de biomolécules selon l'une quelconque des revendications précédentes, dans lequel lesdites voies de traitement secondaires comprennent des microcanaux avec des parois ayant différentes caractéristiques de surface.

13. Système microfluidique de séparation de biomolécules selon l'une quelconque des revendications précédentes, dans lequel lesdites voies de traitement secondaires comprennent des microcanaux comprenant un milieu de séparation.

14. Système microfluidique de séparation de biomolécules selon l'une quelconque des revendications précédentes, dans lequel ladite voie de séparation primaire est dotée d'un microcanal primaire avec un revêtement de séparation, ledit microcanal primaire étant sensiblement circulaire et s'étendant autour du centre du dispositif en forme de disque.

15. Système microfluidique de séparation de biomolécules selon la revendication 14, dans lequel lesdites voies de traitement secondaires s'étendent de la voie primaire vers la périphérie du dispositif en forme de disque.

16. Système microfluidique de séparation de biomolécules selon l'une quelconque des revendications précédentes, dans lequel ledit canal fournissant la voie de séparation primaire comprend 2 stations de collecte ou plus sous la forme d'ouvertures dans le microcanal, lesquelles ouvertures constituent des orifices d'entrée dans les voies secondaires.

17. Système microfluidique de séparation de biomolécules selon l'une quelconque des revendications précédentes, dans lequel une ou plusieurs des voies de traitement secondaires sont une voie ou des voies de séparation.
